(19)

Europäisches
Patentamt
European
Patent Office
Office européen
des brevets

(11) **EP 2 713 287 A1**

(12) **EUROPEAN PATENT APPLICATION**
published in accordance with Art. 153(4) EPC

(43) Date of publication:
**02.04.2014 Bulletin 2014/14**

(51) Int Cl.:
**G06F 17/30** (2006.01)

(21) Application number: **12857642.8**

(22) Date of filing: **13.12.2012**

(86) International application number:
**PCT/CN2012/086575**

(87) International publication number:
**WO 2013/087005 (20.06.2013 Gazette 2013/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2011  CN 201110415749**

(71) Applicants:
• **Peking University Founder Group Co., Ltd
  Haidian District
  Beijing 100871 (CN)**
• **Peking University
  Beijing 100871 (CN)**
• **Beijing Founder Electronics Co., Ltd.
  Haidian District, Beijing 100085 (CN)**

(72) Inventors:
• **ZHANG, Tao
  Beijing 100871 (CN)**
• **YU, Xiaoming
  Beijing 100871 (CN)**
• **YANG, Jianwu
  Beijing 100871 (CN)**

(74) Representative: **Rataboul, Xavier et al
  Cabinet Orès
  36 rue de St Pétersbourg
  75008 Paris (FR)**

(54) **NETWORK COMMENT COLLECTION METHOD AND SYSTEM**

(57)    Disclosed are a network comment collection method and system. The method comprises: obtaining a web page entry link address; determining whether a web page corresponding to the web page entry link address has N network comments, N being a positive integer; when there are N network comments, determining whether M network comments among the N network comments satisfy a collection condition, M being a positive integer less than or equal to N; when there are M network comments satisfying the collection condition, collecting the M network comments.

Fig.1

## Description

This application claims priority from Chinese Patent Application No. 201110415749.9, filed with the Chinese Patent Office on December 13, 2011 and entitled "Network comment collection method and system", which is hereby incorporated by reference in its entirety.

## Field of the Invention

The present invention relates to the technical field of information retrieval and data integration and particularly to a network comment collection method and system.

## Background of the Invention

At present the Internet has become the largest information base in the world along with rapid development of Internet technologies, and it relates to almost all the fields of human beings and has become an important platform over which people can retrieve information and exchange information. In order to make it convenient for people to search for information, Internet-based information retrieval technologies have also been investigated thoroughly and developed profoundly, and relevant applications based upon information retrieval, for example, an analysis of network public opinions, vertical search for comments, etc., also have emerged. In all of these application technologies, firstly a webpage is downloaded locally, and then irrelevant information is removed and contents required for an analysis are extracted, and finally the analysis is further made on this basis.

For information published on the Internet, network users can post their ideas after browsing the information, thus resulting in comments on the information. Due to the popularity, universality and instantaneity of the existing Internet, the network comments can represent an idea of the public about an event to some extent, which involves great significance to the analysis of public opinions and application scope of the analysis of public opinions.

Thus network comments have become one of important data sources in numerous applications, and collection of data sources of network comments is a most fundamental condition. In the prior art, the research on collection of network comments is almost absent, and there is no technology for collecting network comments efficiently and comprehensively.

## Summary of the Invention

Embodiments of the invention provide a network comment collection method and system so as to collect network comments efficiently and comprehensively.

In an aspect, an embodiment of the invention provides a network comment collection method, which includes: obtaining a webpage entry link address; determining whether there are N network comments on a webpage corresponding to the webpage entry link address, wherein N is a positive integer; determining whether there are M network comments satisfying a collection condition among the N network comments when there are the N network comments, wherein M is a positive integer less than or equal to N; and collecting the M network comments when there are the M network comments satisfying the collection condition.

Preferably obtaining the webpage entry link address specifically comprises: obtaining a subject webpage where a subject to which the N network comments relate is posted; obtaining a feature code of the subject webpage; obtaining a feature code of a channel where the subject is posted; and splicing the feature code of the subject webpage and the feature code of the channel to obtain the webpage entry link address.

Preferably the webpage entry link address is refreshed periodically.

Preferably the webpage entry link address is deleted when the network comments on the webpage have not been updated for a predetermined period of time.

Preferably determining whether there are M network comments satisfying the collection condition among the N network comments specifically comprises: computing a difference between N and P, and if N is greater than P, then indicating that there are newly added network comments, the number of which is the difference M between N and P, wherein P is the number of network comments in last access to the webpage.

Preferably the number L of network comments included in a current page of the webpage is counted, and if L is less than M, then the number of pages to be turned is counted and a page-turn link corresponding to the number of pages is extracted, wherein L is a positive integer.

Preferably each of the N network comments is compared respectively with each of the P network comments, and if there are inconsistent comparison results, then the M network comments with the inconsistent comparison results are extracted.

Preferably determining whether there are M network comments satisfying the collection condition among the N network comments specifically comprises: comparing each of the N network comments respectively with each of the P network comments, and if there are inconsistent comparison results, then determining the M network comments with the inconsistent comparison results as the network comments satisfying the collection condition.

Preferably contents of the extracted M network comments are stored into a storage unit different from the webpage.

In another aspect, an embodiment of the invention provides a network comment collection system, which includes: an entry link obtaining component configured to obtain a webpage entry link address; a first determining component configured to determine whether there are N network comments on a webpage corresponding to the webpage entry link address, wherein N is a positive integer; a second determining component configured to determine whether there are M network comments satisfying a collection condition among the N network comments when there are the N network comments, wherein M is a positive integer less than or equal to N; and a content collecting component configured to collect the M network comments when there are the M network comments satisfying the collection condition.

The invention has the following advantageous effect:

In the embodiments of the invention, network comments are collected by using the network comment collection system, and the technical effect of comprehensive collection of network comments is achieved by obtaining the entry link address of the network comments and setting the collection condition.

Furthermore a comparing component is further used to compare each of all the currently extracted comments with each of all the lastly extracted comments, and then a content extracting component is used to extract only those comments with inconsistent comparison results, so the effect of efficient collection of network comments can be achieved together with the comprehensive collection of the network comments.

**Brief Description of the Drawings**

Fig.1 is a flow chart of a collection method according to an embodiment of the invention;

Fig.2 is a detailed flow chart of the collection method in Fig.1 according to the invention;

Fig.3 is a detailed flow chart of the collection method in Fig.1 according to the invention;

Fig.4 is an architectural diagram of a collection system according to a first embodiment of the invention;

Fig.5 is an architectural diagram of a collection system according to a second embodiment of the invention;

Fig.6 is an architectural diagram of a collection system according to a third embodiment of the invention;

Fig.7 is an architectural diagram of a collection system according to a fourth embodiment of the invention; and

Fig.8 is an architectural diagram of a collection system according to another embodiment of the invention.

tion.

**Detailed Description of the Embodiments**

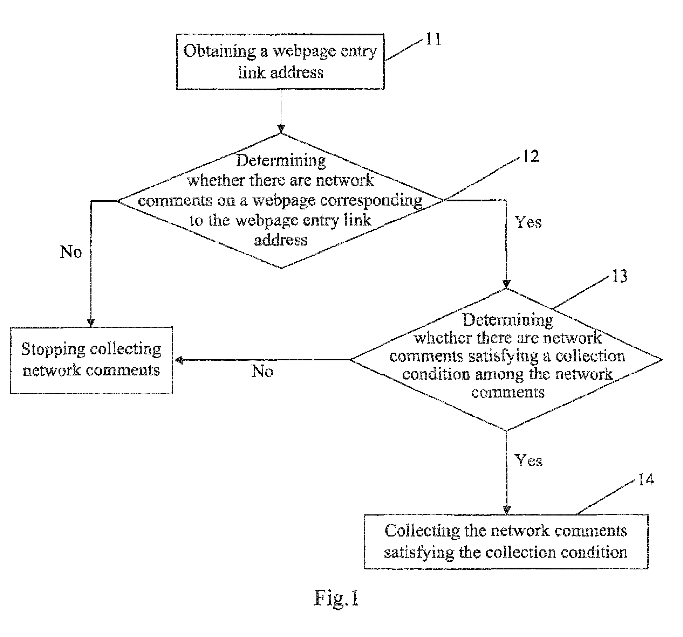

An embodiment of the invention provides a network comment collection method, which is used to collect network comments. As illustrated in Fig.1, the collection method includes:

Step 11: Obtaining a webpage entry link address;

Step 12: Determining whether there are N network comments on a webpage corresponding to the webpage entry link address, where N is a positive integer;

Step 13: Determining whether there are M network comments satisfying a collection condition among the N network comments when there are the N network comments, where M is a positive integer less than or equal to N; and

Step 14: Collecting the M network comments when there are the M network comments satisfying the collection condition.

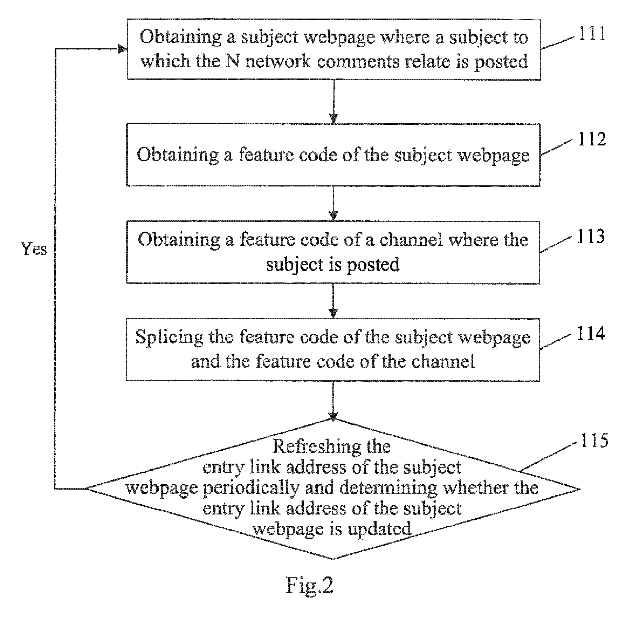

Particularly referring to Fig.2, the step 11 specifically includes:

Step 111: Obtaining a subject webpage where a subject to which the N network comments relate is posted;

Step 112: Obtaining a feature code of the subject webpage;

Step 113: Obtaining a feature code of a channel where the subject is posted; and

Step 114: Splicing the feature code of the subject webpage and the feature code of the channel to obtain the webpage entry link address.

In the invention, the subject webpage can be a page where news is posted or a page where commodity information is posted, and now this embodiment will be detailed taking a news webpage as an example, but in practice, the subject webpage can alternatively be a page where other information is posted, and the invention will not be limited in this respect.

In this embodiment, feature codes in script program of a comment page where news is commented are spliced under a specific rule to obtain an entry link address of the comment page. For example, a feature code identifying news, a feature code identifying a channel where the news is posted, a domain name and some other elements (e.g., the current time) are spliced to obtain an entry link address of a page of network comments on the news by script program of the news page. The above-mentioned feature codes are obtained, and the personalized rule is configured, so that the entry link address of the network comment page is matched in a specified pattern.

Referring to Fig.2 again, furthermore the step 11 further includes:

Step 115: Refreshing the webpage entry link address periodically.

In the step 115, the news may be reedited at the website background of the news page, and a link to the news webpage of the same contents may be changed. That is, the feature codes identifying the news and the channel where the news is posted may be changed, and also the network comment entry link may be changed consequently, so new network comment contents will be loaded through the changed network comment entry link, and the page at the originally extracted network comment entry link address will not be provided with any update of new comments. As can be apparent, newly updated comment contents can not be obtained if an access is made still using the originally recorded network comment entry link, so in view of this, the currently recorded link to the news page is refreshed periodically, and if the link address is changed, then the website will be redirected automatically to the changed news webpage, and thus the network comment entry link can be extracted again according to the newly obtained news webpage for further collection. That is, if the news webpage entry link address is updated, then the flow jumps to the step 111, otherwise, the flow ends.

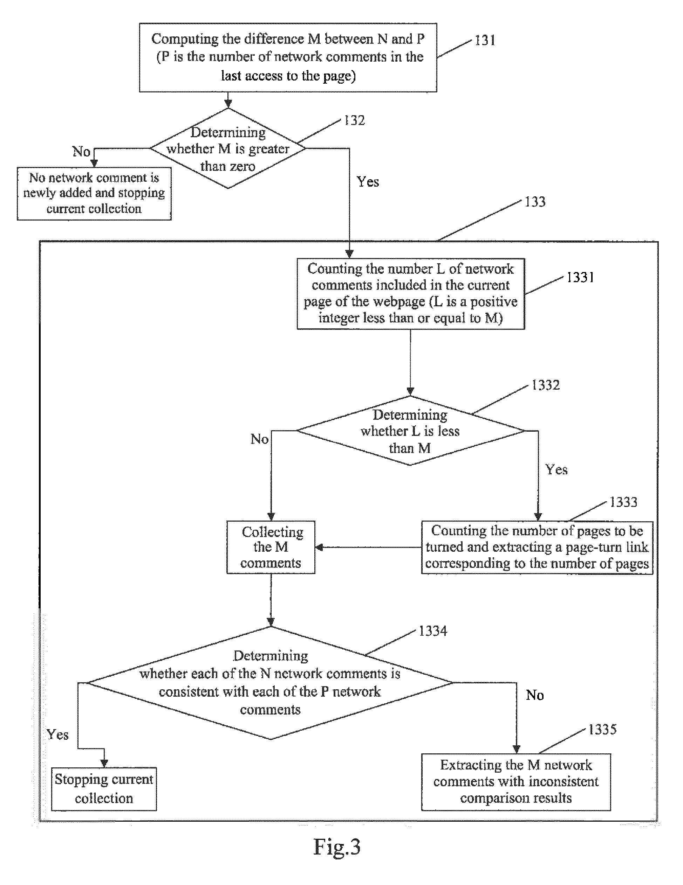

Referring to Fig.3, particular steps of the step 13 include:

Step 131: Extracting the number N of current network comments from the webpage and computing the difference M between N and P, where P is the number of extracted network comments in the last access to the link;

Step 132: Determining whether M is greater than zero; and

Step 133: Extracting the M network comments when a result of the step 132 is yes.

Particularly in the step 131, the number N of current network comments can be extracted from the webpage in a regular expression or by using other methods, and the invention will not be limited in this respect. P is equal to zero when it is the first time that the network comments are collected.

Referring to Fig.3 again, the step 133 particularly includes:

Step 1331: Counting the number L of network comments included in the current page of the webpage, where L is a positive integer less than or equal to M;

Step 1332: Determining whether L is less than M; and

Step 1333: Counting the number of pages to be turned and extracting a page-turn link corresponding to the number of pages when a result of the step 1332 is yes.

Particularly in the step 1333, the number of pages to be turned is counted in the formulas of:

$$P_{count} = ceil(\frac{C_{Update} - C_{Current}}{N_{Perpage}})$$

Where $P_{count}$ represents the number of pages to be turned, $C_{Update}$ (i.e., M) represents the number of updated comments, $C_{Current}$ (i.e., L) represents the number of current webpage comments, and $N_{Perpage}$ represent the number of webpage comments per page.

Referring to Fig.3 again, the step 133 further includes:

Step 1334: Determining whether each of the N network comments is consistent with each of the P network comments; and

Step 1335: Extracting the M network comments with inconsistent comparison results when a result of the step 1334 is no.

**[0050]** In the step 1335, contents of the extracted M network comments will be stored into a storage unit different from the comment webpage, where the network comments stored into the storage unit facilitates centralized browsing and makes it convenient for a user to apply the collected network comments.

In this embodiment, the news has a period of validity, and the news will be considered useless after the specific period of time elapses, and also the news comments accompanying the news will also be invalidated as the news is invalidated. In view of this, if the network comments have not been updated for a predetermined period of time, then a link to the news comments will be deleted instead of being refreshed, thereby saving system resources and increasing the operation efficiency.

In another embodiment, it can be determined whether there are M network comments satisfying the collection condition among the N network comments by directly comparing each of the N network comments respectively with each of the P network comments and extracting the M network comments with inconsistent comparison results if there are the inconsistent comparison results, instead of computing the difference M between N and P as in the foregoing embodiment. This collection method is adopted because the network comments may be deleted aperiodically at the website background of the news webpage, for example, there are 15 network comments firstly collected by the system, and during the interval between two collection instances, all the 15 network comments are deleted at the website background due to some reasons, and in the meanwhile, 30 new comments are added, but only 15 comments can be displayed per page, so the network comments on both the first and second pages of the network comments can be considered as new ones. When the collection cycle arrives, the 30 comments collected currently are compared with the last 15 comments, and as a result of such comparison, none of the 30 comments collected currently is consistent with any of the last 15 comments, so the 30 new comments shall be collected at this time. Furthermore the 30 network comments collected currently are stored into a storage unit different from the comment webpage, where the network comments stored into the storage unit facilitates centralized browsing and makes it convenient for a user to apply the collected network comments.

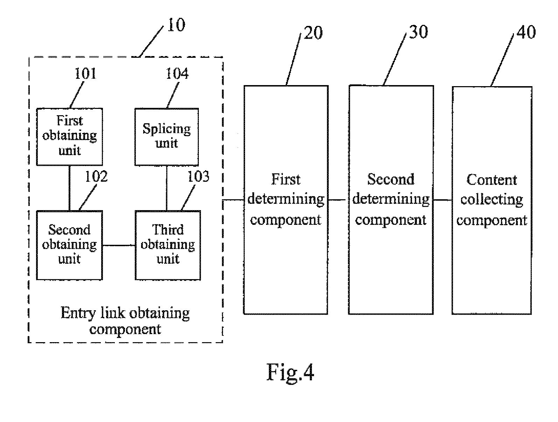

A first embodiment of the invention provides a network data collection system, and referring to Fig.4, an architectural diagram of the system in this embodiment is illustrated. As illustrated in Fig.4, the system includes an entry link obtaining component 10, a first determining component 20, a second determining component 30 and a content collecting component 40. The entry link obtaining component 10 is configured to obtain a webpage entry link address. The first determining component 20 is configured to determine whether there are N network comments on a webpage corresponding to the webpage entry link address. The second determining component 30 is configured to determine whether there are M network comments satisfying a collection condition. The content collecting component 40 is configured to collect the network comments.

Particularly the entry link obtaining component 10 includes a first obtaining unit 101, a second obtaining unit 102, a third obtaining unit 103 and a splicing unit 104. The first obtaining unit 101 is configured to obtain a subject webpage where a subject to which the N network comments relate is posted; the second obtaining unit 102 is configured to obtain a feature code of the subject webpage; the third obtaining unit 103 is configured to obtain a feature code of a channel where the subject is posted; and the splicing unit 104 is configured to splice the feature code of the subject webpage and the feature code of the channel to obtain the webpage entry link address.

The second determining component 30 is configured to determine whether there are M network comments satisfying the collection condition, and particularly configured to extract the N network comments from the webpage and compute the difference M between N and P, where P is the number of extracted network comments in the last access to the link. Furthermore, it is further determined whether M is greater than zero, and if M is greater than zero, then it indicates that the M network comments are comments satisfying the collection condition. In a second embodiment, the difference from the first embodiment is that the system further includes an entry link address refreshing component 50, which is configured to refresh the webpage entry link address periodically, and in this embodiment, the entry link address refreshing component 50 can be used in cooperation with the entry link obtaining component 10 for real-time collection of the updated network comments.

In a third embodiment, the difference from the first and second embodiments is that the system further includes a network comment page refreshing component 60 configured to determine whether the network comments on the webpage have not been updated for a predetermined period of time, and if so, to delete the webpage entry link address. In this embodiment, the network comment page refreshing component 60 can be used in cooperation with the first determining component 20 so as to increase the collection efficiency of the system by giving up the collection of the network comments which have not been updated for a long period of time.

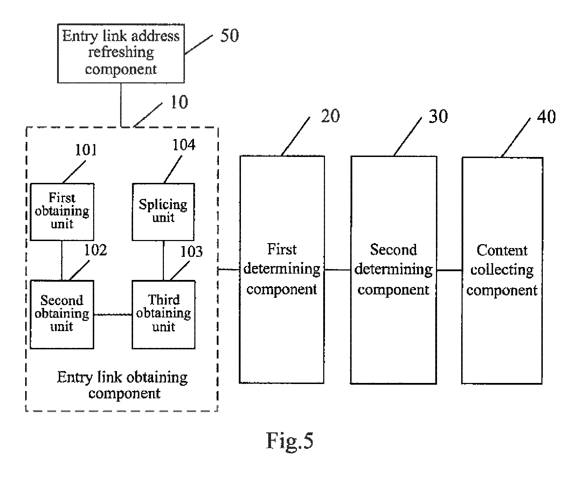

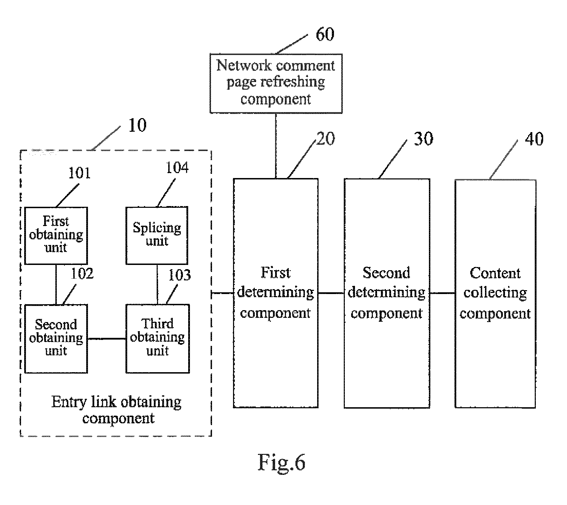

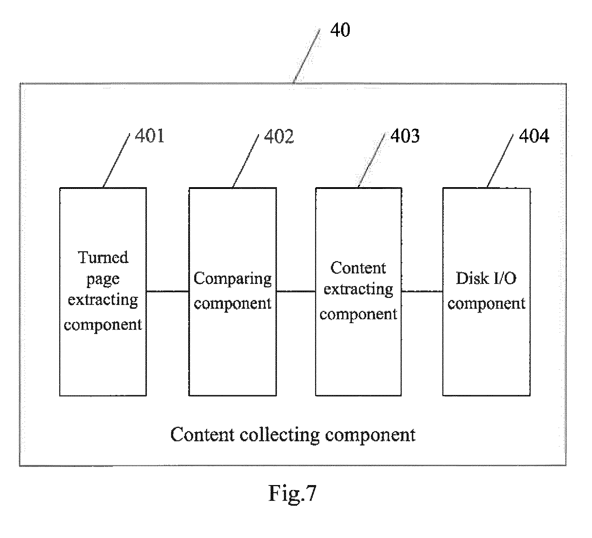

Reference is made to Fig.5 and Fig.6 respectively for the second and third embodiments. In practice, the two embodiments can be used in combination for both comprehensive collection of network comments and increased collection efficiency of the system. In a fourth embodiment, the difference from the first, second and third embodiments is that the content collecting component 40 further includes a turned page extracting component 401, a comparing component 402, a content extracting component 403 and a disk I/O component 404. The turned page extracting component 401 is configured to count the number of pages to be turned and to extract a page-turn link corresponding to the number of pages; the comparing component 402 is configured to compare each of the N network comments respectively with each of the P network comments; the content extracting component 403 is configured to extract network comments with inconsistent comparison results when there are the inconsistent comparison results; and the disk I/O component 404 is configured to store contents of the extracted network comments into a storage unit different from the webpage. Reference is made to Fig.7 for this embodiment.

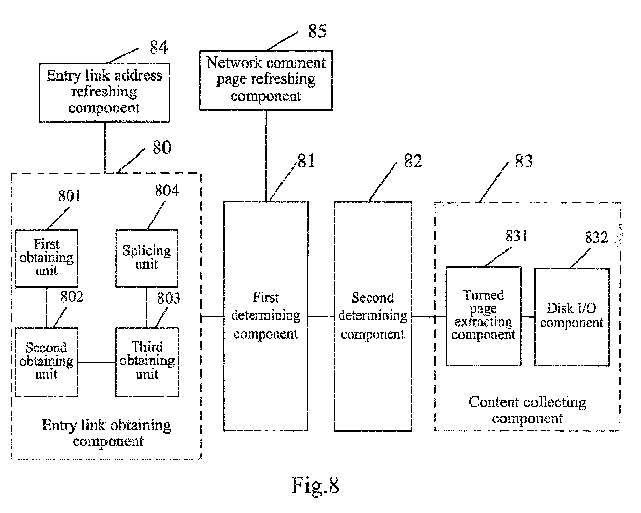

Another embodiment of the invention provides a network data collection system, and referring to Fig.8, an architectural diagram of the system in this embodiment is illustrated.

The difference of this embodiment from the first embodiment is that the comparing component 402 and the content extracting component 403 are omitted in this embodiment. As illustrated in Fig.8, the system according to this embodiment includes an entry link obtaining component 80, a first determining component 81, a second determining component 82 and a content collecting component 83. The entry link obtaining component 80 is configured to obtain a webpage entry link address. The first determining component 81 is configured to determine whether there are network comments on a webpage corresponding to the webpage entry link address. The second determining component 82 is configured to determine whether there are network comments satisfying a collection condition. The content collecting component 83 is configured to collect the network comments.

Particularly the entry link obtaining component 80 includes a first obtaining unit 801, a second obtaining unit 802, a third obtaining unit 803 and a splicing unit 804. The first obtaining unit 801 is configured to obtain a subject webpage where a subject to which N network comments relate is posted; the second obtaining unit 802 is configured to obtain a feature code of the subject webpage; the third obtaining unit 803 is configured to obtain a feature code of a channel where the subject is posted; and the splicing unit 804 is configured to splice the feature code of the subject webpage and the feature code of the channel to obtain the webpage entry link address.

The second determining component 82 is configured to compare each of the N network comments respectively with each of the P network comments and to determine M network comments with inconsistent comparison results as the network comments satisfying the collection condition if there are the inconsistent comparison results.

The content collecting component 83 includes a turned page extracting component 831 and a disk I/O component 832. The turned page extracting component 831 is configured to count the number of pages to be turned and to extract a page-turn link corresponding to the number of pages; and the disk I/O component 832 is configured to store contents of the extracted network comments into a storage unit different from the webpage.

In this embodiment, the entry link obtaining component 80 can be used in cooperation with the entry link address refreshing component 84 in the second embodiment so as to achieve comprehensive collection of network comments. The first determining component 81 can be used in combination with the network comment page refreshing component 85 in the third embodiment so as to collect network comments comprehensively and efficiently.

The systems in the above-mentioned first, second, third and fourth embodiments and the other embodiment can be implemented in accordance with the description for the methods and numerous variants thereof in the embodiments of the network comment collection method according to the invention, so repeated description of the systems will be omitted here for the sake of a concise specification.

In the embodiments of the invention, network comments are collected by using the network comment collection system, and the technical effect of comprehensive collection of network comments is achieved by obtaining the entry link address of the network comments and setting the collection condition.

Furthermore the comparing component is further used to compare each of all the currently extracted comments with each of all the lastly extracted comments, and then the content extracting component is used to extract only those comments with inconsistent comparison results, so the effect of efficient collection of network comments can be achieved together with comprehensive collection of the network comments.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

**Claims**

1. A network comment collection method, comprising:

   obtaining a webpage entry link address;
   determining whether there are N network comments on a webpage corresponding to the webpage entry link address, wherein N is a positive integer;
   determining whether there are M network comments satisfying a collection condition among the N network comments when there are the N network comments, wherein M is a positive integer less than or equal to N; and
   collecting the M network comments when there are the M network comments satisfying the collection condition.

2. The method according to claim 1, wherein obtaining the webpage entry link address specifically comprises:

obtaining a subject webpage where a subject to which the N network comments relate is posted; obtaining a feature code of the subject webpage; obtaining a feature code of a channel where the subject is posted; and splicing the feature code of the subject webpage and the feature code of the channel to obtain the webpage entry link address.

3. The method according to claim 2, further comprising: refreshing the webpage entry link address periodically.

4. The method according to claim 1, further comprising: deleting the webpage entry link address when the network comments on the webpage have not been updated for a predetermined period of time.

5. The method according to claim 1, wherein determining whether there are M network comments satisfying the collection condition among the N network comments specifically comprises: computing a difference between N and P, and if N is greater than P, then indicating that there are newly added network comments, the number of which is the difference M between N and P, wherein P is the number of network comments in last access to the webpage.

6. The method according to claim 5, further comprising: counting the number L of network comments included in a current page of the webpage, and if L is less than M, then counting the number of pages to be turned and extracting a page-turn link corresponding to the number of pages, wherein L is a positive integer.

7. The method according to claim 5, further comprising: comparing each of the N network comments respectively with each of the P network comments, and if there are inconsistent comparison results, then extracting the M network comments with the inconsistent comparison results.

8. The method according to claim 1, wherein determining whether there are M network comments satisfying the collection condition among the N network comments specifically comprises: comparing each of the N network comments respectively with each of the P network comments, and if there are inconsistent comparison results, then determining the M network comments with the inconsistent comparison results as the network comments satisfying the collection condition.

9. The method according to claim 1, further comprising: storing contents of the extracted M network comments into a storage unit different from the webpage.

10. A network comment collection system, comprising:

an entry link obtaining component configured to obtain a webpage entry link address; a first determining component configured to determine whether there are N network comments on a webpage corresponding to the webpage entry link address, wherein N is a positive integer; a second determining component configured to determine whether there are M network comments satisfying a collection condition among the N network comments when there are the N network comments, wherein M is a positive integer less than or equal to N; and a content collecting component configured to collect the M network comments when there are the M network comments satisfying the collection condition.

Obtaining a webpage entry
link address ⟋11

Determining
whether there are network
comments on a webpage corresponding
to the webpage entry link
address ⟋12

No

Yes

Stopping collecting
network comments

No

Determining
whether there are network
comments satisfying a collection
condition among the network
comments ⟋13

Yes

Collecting the network comments
satisfying the collection condition ⟋14

Fig.1

Obtaining a subject webpage where a subject to which the N network comments relate is posted — 111

Obtaining a feature code of the subject webpage — 112

Obtaining a feature code of a channel where the subject is posted — 113

Splicing the feature code of the subject webpage and the feature code of the channel — 114

Yes

Refreshing the entry link address of the subject webpage periodically and determining whether the entry link address of the subject webpage is updated — 115

Fig.2

EP 2 713 287 A1

Fig.3

10

Fig.4

Fig.5

EP 2 713 287 A1

Fig.6

13

40

401 402 403 404

| Turned page extracting component | Comparing component | Content extracting component | Disk I/O component |

Content collecting component

Fig.7

Fig.8

# INTERNATIONAL SEARCH REPORT

| International application No. |
|---|
| PCT/CN2012/086575 |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

IPC: G06F17/-; G06F15/-; H04L12/-; H04M1/-; H04Q7/-; H04M3/-;

Documentation searched other than minimum documentation to the extent that such documents are included in the fields searched

Electronic data base consulted during the international search (name of data base and, where practicable, search terms used)

CNABS, SIPOABS, DWPI: web, network, data, information, link, criticism, acquisition, review

## C. DOCUMENTS CONSIDERED TO BE RELEVANT

| Category* | Citation of document, with indication, where appropriate, of the relevant passages | Relevant to claim No. |
|---|---|---|
| X | CN 101515269 A (CHINESE ACAD SCI AUTOMATION INST) 26 August 2009 (26.08.2009) description, page 2, line 8 to page 7, line 1,figure 1 and the abstract | 1-2, 5-10 |
| Y | | 3-4 |
| Y | CN 101178713 A (TENCENT SCI&TECHNOLOGY SHENZHEN CO LTD) 14 May 2008 (14.05.2008) description, page 2, line 2, line 15 to line 23 | 3-4 |
| A | US 6707470 B1 (NEC COPRORATION) 16 March 2004 (16.03.2004) , the whole document | 1-10 |
| A | CN 101436196 A (UNIV BEIJING POSTS&TELECOM) 20 May 2009 (20.05.2009) description, page 2, line 8 to page 8, line 24, figure 1 and the abstract | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 February 2013 (26.02.2013) | **21 March 2013 (21.03.2013)** |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer GONG , JinLing Telephone No. (86-10) **62413492** |
|---|---|

Form PCT/ISA /210 (second sheet) (July 2009)

<table>
<tr><td colspan="2"><strong>INTERNATIONAL SEARCH REPORT</strong><br>Information on patent family members</td><td colspan="2">International application No.<br><strong>PCT/CN2012/086575</strong></td></tr>
<tr><td>Patent Documents referred<br>in the Report</td><td>Publication Date</td><td>Patent Family</td><td>Publication Date</td></tr>
<tr><td>CN 101515269 A</td><td>26.08.2009</td><td>CN 101515269 B</td><td>31.08.2011</td></tr>
<tr><td>CN 101178713 A</td><td>14.05.2008</td><td>None</td><td></td></tr>
<tr><td>US 6707470 B1</td><td>16.03.2004</td><td>JP 2000330856 A</td><td>30.11.2000</td></tr>
<tr><td>CN 101436196 A</td><td>20.05.2009</td><td>CN 101436196 B</td><td>08.12.2010</td></tr>
</table>

Form PCT/ISA /210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110415749